(19) Europäisches Patentamt / European Patent Office / Office européen des brevets

(11) **EP 3 209 412 B1**

(12) **EUROPÄISCHE PATENTSCHRIFT**

(45) Veröffentlichungstag und Bekanntmachung des Hinweises auf die Patenterteilung:
**17.02.2021   Patentblatt 2021/07**

(51) Int Cl.:
**B01D 65/10** (2006.01)   **C25B 15/06** (2006.01)
**C25B 1/12** (2006.01)

(21) Anmeldenummer: **15813730.7**

(22) Anmeldetag: **08.12.2015**

(86) Internationale Anmeldenummer:
**PCT/EP2015/078979**

(87) Internationale Veröffentlichungsnummer:
**WO 2016/116211 (28.07.2016 Gazette 2016/30)**

(54) **ÜBERPRÜFUNG EINER MEMBRANDICHTHEIT WENIGSTENS EINER MEMBRAN EINES ELEKTROLYSEURS**

CHECKING THE INTEGRITY OF A MEMBRANE USING AT LEAST ONE MEMBRANE OF AN ELECTROLYZER

VÉRIFICATION DE L'ÉTANCHÉITÉ D'AU MOINS UNE MEMBRANE D'UN ÉLECTROLYSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2015   EP 15151622**

(43) Veröffentlichungstag der Anmeldung:
**30.08.2017   Patentblatt 2017/35**

(73) Patentinhaber: **Siemens Energy Global GmbH & Co. KG**
**81739 München (DE)**

(72) Erfinder:
• **HANEBUTH, Marc**
**90482 Nürnberg (DE)**
• **HERTSCH, Hagen**
**91056 Erlangen (DE)**
• **SAWINSKY, Michael**
**96155 Buttenheim (DE)**

(56) Entgegenhaltungen:
**EP-A1- 1 473 386        EP-A2- 2 006 418**
**JP-A- 2000 054 175      JP-A- 2004 084 042**
**JP-A- 2006 138 004      JP-A- 2010 121 146**

**Beschreibung**

Die Erfindung betrifft ein Verfahren und eine Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist. Solche Verfahren sind z.B. aus der JP 2010 121146 A und der EP 2 006 418 A2 bekannt.

Insbesondere betrifft die Erfindung die Überprüfung der Membrandichtheit eines Elektrolyseurs für eine Wasserelektrolyse, bei der Wasser in die Produktgase Sauerstoff und Wasserstoff zerlegt wird, wobei der Elektrolyseur beispielsweise als ein Protonen-Austausch-Membran-Elektrolyseur (so genannter PEM-Elektrolyseur) mit wenigstens einer protonendurchlässigen Polymermembran (PEM = polymer electrolyte membrane) ausgebildet ist. PEM-Elektrolyseure haben den Vorteil, dass sie sehr dynamisch betrieben werden können und somit hervorragend für die Verwendung von regenerativem Überschussstrom für die Produktion von Wasserstoff geeignet sind.

Bei der Elektrolyse von Wasser werden stets die beiden Produktgase Wasserstoff und Sauerstoff gleichzeitig gebildet. Diese Produktgase müssen zu jeder Zeit getrennt vorliegen und dürfen sich nicht vermischen. Membranen des Elektrolyseurs können im laufenden Betrieb Leckagen entwickeln, so dass eine hermetische Trennung der beiden Produktgase nicht mehr garantiert werden kann. In diesem Fall kann ein Vermischen der Produktgase eintreten, so dass im Extremfall ein unsicherer Betriebszustand eintreten kann. Dieser Fall muss durch geeignete Maßnahmen ausgeschlossen werden.

Leckagen von Membranen eines Elektrolyseurs können beispielsweise erkannt werden, indem geprüft wird, ob ein Produktgas eine Membran durchdringt. Dieses Vorgehen erfordert eine eigenständige Überwachung der Produktgase und ist relativ aufwändig. Herausfordernd im Fall eines Elektrolyseurs für eine Wasserelektrolyse ist insbesondere, dass Wasser im System vorhanden ist, so dass zusammen mit den beiden Produktgasen bis zu drei Komponenten gleichzeitig vorliegen können. Bei einer dynamischen Fahrweise, welche im Allgemeinen Temperatur- und Druckänderungen nach sich zieht, variiert der Wassergehalt mitunter stark. Dies erschwert gerade bei einfachen (robusten) Analysemethoden eine Kalibrierung. Außerdem können unerwünschte Kondensationseffekte eintreten.

Bei einer typischen technischen Umsetzung der Überwachung der Produktgase zur Erkennung von Membranleckagen wird ein geringer Gasstrom, der von einem Produktgas abgezweigt wird, analysiert. Mit Hilfe eines z.B. aktiv gekühlten Kondensators kann das abgezweigte Gas getrocknet werden. Zeitlich wechselnde Betriebsdrücke können durch einen Druckminderer vereinheitlicht werden. Als Detektoren kommen beispielsweise Gaschromatographen, Wärmeleitfähigkeitsdetektoren oder katalytische Sensoren in Frage. Letztgenannte verursachen bei Vorhandensein von Wasserstoff und Sauerstoff eine chemische Reaktion und registrieren daraufhin eine Temperaturerhöhung. Ein derartiges Vorgehen hat den Nachteil, dass zusätzliche Bauteile nötig sind, und dass relativ aufwändige Kalibrierungen durchgeführt werden müssen.

Der Erfindung liegt die Aufgabe zugrunde, ein verbessertes Verfahren und eine verbesserte Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, anzugeben.

Die Aufgabe wird erfindungsgemäß hinsichtlich des Verfahrens durch die Merkmale des Anspruchs 1 und hinsichtlich der Prüfvorrichtung durch die Merkmale des Anspruchs 12 gelöst.

Vorteilhafte Ausgestaltungen der Erfindung sind Gegenstand der Unteransprüche.

Bei dem erfindungsgemäßen Verfahren zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, werden folgende Schritte durchgeführt:

-  während einer Elektrolyse eine Elektrolysestromstärke erfasst wird und ein Flüssigkeitsmengenstrom der Ausgangsflüssigkeit zwischen den beiden Elektrolyseurvolumina ermittelt wird
-  und eine Verhältniskenngröße, die proportional zu dem Quotienten aus dem ermittelten Flüssigkeitsmengenstrom und der erfassten Elektrolysestromstärke ist, gebildet und zur Überprüfung der Membrandichtheit verwendet wird, wobei ein erster Verhältnisschwellenwert für die Verhältniskenngröße vorgegeben wird und auf eine Leckage wenigstens einer Membran geschlossen wird, wenn die Verhältniskenngröße den vorgegebenen ersten Verhältnisschwellenwert überschreitet und/oder ein zweiter Verhältnisschwellenwert für die Verhältniskenngröße vorgegeben wird und auf eine Leckage wenigstens einer Membran geschlossen wird, wenn die Verhältniskenngröße den vorgegebenen zweiten Verhältnisschwellenwert unterschreitet.

Das Verfahren sieht also vor, die Membrandichtheit eines Elektrolyseurs nicht anhand von Gasanalysen von Produktgasen, sondern stattdessen durch eine Analyse eines Flüssigkeitsmengenstroms der Ausgangsflüssigkeit durch die wenigstens eine Membran des Elektrolyseurs zu überwachen, der sich als Flüssigkeitsmengenstrom zwischen den beiden durch die wenigstens eine Membran getrennten Elektrolyseurvolumina manifestiert. Dem Verfahren liegt zugrunde, dass außer den Molekülen eines Produktgases auch an der Elektrolyse nicht beteiligte Moleküle der Ausgangsflüssigkeit die wenigstens eine Membran durchdringen und somit von einem Elektrolyseurvolumen in das andere Elektrolyseurvolumen gelangen. Bei einer Leckage einer Membran können mehr Moleküle der Ausgangsflüssigkeit diese Membran durchdringen, was eine Änderung des Flüssigkeitsmengenstroms zwischen den beiden Elektrolyseurvolumina zur Folge hat. Daher ermöglicht eine Ermittlung dieses Flüssigkeitsmengenstroms eine Überprüfung der Membrandichtheit.

Ferner sieht die Erfindung vor, dass während einer Elektrolyse eine Elektrolysestromstärke erfasst wird und eine Verhältniskenngröße, die proportional zu dem Quotienten aus dem ermittelten Flüssigkeitsmengenstrom und der erfassten Elektrolysestromstärke ist, gebildet und zur Beurteilung der Membrandichtheit verwendet wird.

Dieses Merkmal der Erfindung nutzt aus, dass in der Regel das Verhältnis der Mengen eines Produktgases und der Ausgangsflüssigkeit, die eine Membran durchdringen, in guter Näherung konstant ist. Im Falle einer Leckage einer Membran entsteht ein zusätzlicher Transportweg für die Ausgangsflüssigkeit durch die Membran, wodurch dieses Verhältnis geändert wird. Daher eignet sich dieses Verhältnis als eine Kenngröße zur Beurteilung der Membrandichtheit. Dabei ist der Elektrolysestromstärke eine einfach zugängliche Messgröße, die ein Maß für die Menge eines die Membran durchdringenden Produktgases ist. Daher eignet sich eine Verhältniskenngröße, die proportional zu dem Quotienten aus dem ermittelten Flüssigkeitsmengenstrom und der erfassten Elektrolysestromstärke ist, besonders vorteilhaft zur Beurteilung der Membrandichtheit.

Erfindungsgemäß wird ein erster Verhältnisschwellenwert für die Verhältniskenngröße vorgegeben und auf eine Leckage wenigstens einer Membran wird geschlossen, wenn die Verhältniskenngröße den vorgegebenen ersten Verhältnisschwellenwert überschreitet, und/oder ein zweiter Verhältnisschwellenwert für die Verhältniskenngröße wird vorgegeben und auf eine Leckage wenigstens einer Membran wird geschlossen, wenn die Verhältniskenngröße den vorgegebenen zweiten Verhältnisschwellenwert unterschreitet. Auf diese Weise werden einfach überprüfbare Kriterien zur Detektion einer Leckage wenigstens einer Membran definiert, die sich als überraschend zuverlässig erwiesen haben. Insbesondere definiert eine Vorgabe beider Verhältnisschwellenwerte einen Toleranzbereich für Werte der Verhältniskenngröße, außerhalb dessen auf eine Leckage einer Membran geschlossen wird. Dadurch wird vorteilhaft berücksichtigt, dass Ausgangsflüssigkeit eine Leckage einer Membran sowohl in derselben Richtung, in der auch ein Produktgas die Membran durchdringt, als auch in dazu entgegengesetzter Richtung passieren kann, wobei die Richtung von der relativen Höhe der Drücke in den beiden Elektrolyseurvolumina abhängt.

Das Verfahren ermöglicht damit vorteilhaft eine Überprüfung der Membrandichtheit ohne eine aufwändige Gasanalyse und Kalibrierung. Insbesondere kann das Verfahren im Unterschied zu Gasanalyseverfahren ohne ein Abzweigen eines Gasstroms und ohne zusätzliche Detektoren zur Gasanalyse des abgezweigten Gasstroms wie Gaschromatographen, Wärmeleitfähigkeitsdetektoren oder katalytische Sensoren durchgeführt werden. Zur Durchführung des Verfahrens sind lediglich Sensoren zur Ermittlung des Flüssigkeitsmengenstroms zwischen den beiden Elektrolyseurvolumina, sowie in einer unten beschriebenen Ausgestaltung des Verfahrens Strommesser zur Erfassung von Elektrolysestromstärken erforderlich. Derartige Sensoren sind in der Regel ohnehin als Komponenten eines Elektrolyseurs vorgesehen, so dass keine zusätzlichen Sensoren zur Realisierung des erfindungsgemäßen Verfahrens benötigt werden. Außerdem ermöglicht das Verfahren eine zuverlässige Überprüfung der Membrandichtheit aufgrund der hohen Messgenauigkeit von Sensoren zur Ermittlung des Flüssigkeitsmengenstroms und Elektrolysestromstärke.

Eine Ausgestaltung der Erfindung sieht vor, dass zur Ermittlung des Flüssigkeitsmengenstroms eine zeitliche Änderung eines Flüssigkeitsvolumens der Ausgangsflüssigkeit in wenigstens einem der beiden Elektrolyseurvolumina ermittelt wird.

Eine zeitliche Änderung eines Flüssigkeitsvolumens der Ausgangsflüssigkeit in wenigstens einem der beiden Elektrolyseurvolumina ist messtechnisch einfach und präzise, beispielsweise mittels Füllstandsensoren, ermittelbar und eignet sich daher vorteilhaft zur Ermittlung des Flüssigkeitsmengenstroms zwischen den Elektrolyseurvolumina.

In der Regel umfasst jedes der beiden Elektrolyseurvolumina ein Behältervolumen eines Abscheidebehälters, in dem ein Produktgas und Ausgangsflüssigkeit gesammelt werden. In einem solchen Fall wird die zeitliche Änderung eines Flüssigkeitsvolumens der Ausgangsflüssigkeit in wenigstens einem der beiden Elektrolyseurvolumina vorzugsweise ermittelt, indem eine zeitliche Änderung eines Flüssigkeitsvolumens der Ausgangsflüssigkeit in dem Behältervolumen des Elektrolyseurvolumens ermittelt wird. Dabei wird die zeitliche Änderung eines Flüssigkeitsvolumens der Ausgangsflüssigkeit in dem Behältervolumen eines Elektrolyseurvolumens beispielsweise ermittelt, indem eine Füllstandshöhe von Ausgangsflüssigkeit in dem Behältervolumen wiederholt erfasst und ausgewertet wird, und/oder indem ein Gasdruck in dem Behältervolumen wiederholt erfasst und ausgewertet wird, und/oder indem eine zeitliche Änderung einer Druckdifferenz zwischen Gasdrücken in den beiden Behältervolumina erfasst und ausgewertet wird.

Die vorgenannten Ausgestaltungen der Erfindung nutzen vorteilhaft aus, dass ein Flüssigkeitsvolumen der Ausgangsflüssigkeit in einem Abscheidebehälter besonders einfach und präzise durch eine Erfassung einer Füllstandshöhe der Ausgangsflüssigkeit und/oder einem Gasdruck in dem Abscheidebehälter und/oder eine Druckdifferenz zwischen Gasdrücken in den beiden Abscheidebehältern ermittelt werden kann.

Eine weitere Ausgestaltung der Erfindung sieht vor, dass die Elektrolyse für eine Unterbrechungsdauer unterbrochen wird, die Elektrolyseurvolumina mit voneinander verschiedenen Flüssigkeitsmengen der Ausgangsflüssigkeit befüllt werden und anhand eines während der Unterbrechungsdauer ermittelten Flüssigkeitsmengenstroms ein Zeitbedarf für ein Angleichen der Flüssigkeitsmengen in den beiden Elektrolyseurvolumina bestimmt und zur Beurteilung der Membrandichtheit verwendet wird.

Diese Ausgestaltung der Erfindung definiert eine Testprozedur zur Beurteilung der Membrandichtheit, die während einer Unterbrechung der Elektrolyse durchgeführt wird. Dabei ist lediglich erforderlich, einen Zeitbedarf für ein Angleichen anfänglich unterschiedlicher Flüssigkeitsmengen der Ausgangsflüssigkeit in den Elektrolyseurvolumina zu ermitteln und auszuwerten. Nachteilig ist jedoch, dass der Elektrolyseur während der Testprozedur nicht für den Elektrolysebetrieb zur Verfügung steht.

Vorzugsweise werden dabei vor der Bestimmung des Zeitbedarfs für ein Angleichen der beiden Flüssigkeitsmengen Gasdrücke in den beiden Elektrolyseurvolumina einander, und beispielsweise einem Umgebungsdruck in einer Umgebung des Elektrolyseurs, angeglichen.

Ein Angleichen der Gasdrücke in den beiden Elektrolyseurvolumina definiert vorteilhaft einheitliche Bedingungen für die Testprozedur und vereinfacht dadurch die Auswertung der Testprozedur zur Beurteilung der Membrandichtheit. Eine Angleichung der Gasdrücke in den beiden Elektrolyseurvolumina an den Umgebungsdruck in einer Umgebung des Elektrolyseurs lässt sich besonders einfach, beispielsweise durch ein kontrolliertes Öffnen von Abblaseleitungen des Elektrolyseurs, realisieren.

Bei der vorgenannten Testprozedur wird ferner beispielsweise der Flüssigkeitsmengenstrom während der Unterbrechungsdauer wiederholt ermittelt und der Zeitbedarf für ein Angleichen der beiden Flüssigkeitsmengen wird anhand einer Extrapolation der erfassten Flüssigkeitsmengenströme bestimmt.

Dies kann die Testprozedur vorteilhaft verkürzen, da die Testprozedur nicht bis zum Erreichen des Angleichens der beiden Flüssigkeitsmengen fortgesetzt zu werden braucht.

Eine erfindungsgemäße Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, umfasst eine Messvorrichtung zur Erfassung einer Flüssigkeitsmenge der Ausgangsflüssigkeit in wenigstens einem der beiden Elektrolyseurvolumina und eine Auswerteeinheit zur Ermittlung eines Flüssigkeitsmengenstroms der Ausgangsflüssigkeit zwischen den beiden Elektrolyseurvolumina anhand der von der Messvorrichtung erfassten Messwerte und zum Bilden einer Verhältniskenngröße, die proportional zu dem Quotienten aus dem ermittelten Flüssigkeitsmengenstrom und der erfassten Elektrolysestromstärke ist, wobei ein erster Verhältnisschwellenwert für die Verhältniskenngröße vorgegeben wird und auf eine Leckage wenigstens einer Membran geschlossen wird, wenn die Verhältniskenngröße den vorgegebenen ersten Verhältnisschwellenwert überschreitet und/oder ein zweiter Verhältnisschwellenwert für die Verhältniskenngröße vorgegeben wird und auf eine Leckage wenigstens einer Membran geschlossen wird, wenn die Verhältniskenngröße den vorgegebenen zweiten Verhältnisschwellenwert unterschreitet.

Eine Ausgestaltung der Prüfvorrichtung sieht einen Strommesser zur Erfassung einer Elektrolysestromstärke des Elektrolyseurs vor. Weitere Ausgestaltungen der Prüfvorrichtung sehen vor, dass die Messvorrichtung wenigstens einen Füllstandssensor zur Erfassung eines Füllstands der Ausgangsflüssigkeit in einem Behältervolumen und/oder wenigstens einen Drucksensor zur Erfassung eines Gasdrucks in einem Behältervolumen umfasst.

Derartige Prüfvorrichtungen ermöglichen die Durchführung des erfindungsgemäßen Verfahrens zur Überprüfung einer Membrandichtheit mit den oben bereits genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1 ein Blockdiagramm eines Elektrolyseurs und einer Vorrichtung zur Überprüfung einer Membrandichtheit des Elektrolyseurs, und

FIG 2 ein Diagramm einen zeitlichen Verlauf einer Verhältniskenngröße.

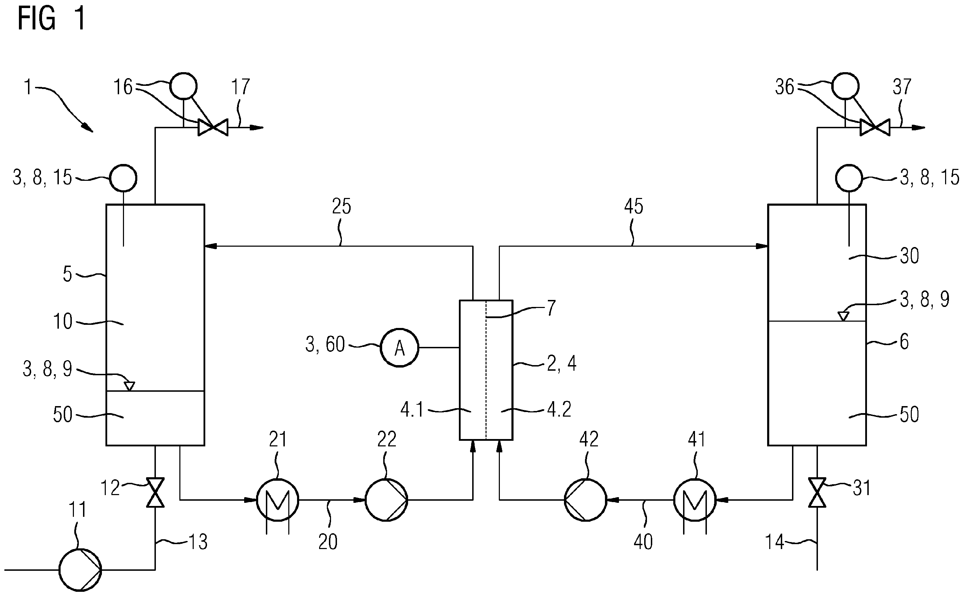

FIG 1 zeigt ein Blockdiagramm eines Elektrolyseurs 1 und einer Prüfvorrichtung 3 zur Überprüfung einer Membrandichtheit wenigstens einer Membran 7 des Elektrolyseurs 1.

Der Elektrolyseur 1 ist zur Erzeugung zweier Produktgase 10, 30 aus einer Ausgangsflüssigkeit 50 mittels einer Elektrolyse ausgebildet. Die Ausgangsflüssigkeit 50 ist beispielsweise Wasser, in welchem Fall bei der Elektrolyse als ein erstes Produktgas 10 Sauerstoff und als zweites Produktgas 30 Wasserstoff erzeugt werden.

Der Elektrolyseur 1 umfasst einen Zellblock 2 mit wenigstens einer Elektrolysezelle 4 und zwei Abscheidebehälter 5, 6. In FIG 1 ist nur eine Elektrolysezelle 4 dargestellt. Im Folgenden wird aber davon ausgegangen, dass der Zellblock 2 mehrere Elektrolysezellen 4 umfasst. Jede Elektrolysezelle 4 weist eine Membran 7 auf, die die Elektrolysezelle 4 in eine erste Teilzelle 4.1 und eine zweite Teilzelle 4.2 teilt. Jede erste Teilzelle 4.1 weist eine Anode für die Elektrolyse auf, jede zweite Teilzelle 4.2 weist eine Kathode für die Elektrolyse auf. Jede Membran 4 ist zur Trennung der bei der Elektrolyse in der jeweiligen Elektrolysezelle 4 erzeugten Produktgase 10, 30 ausgebildet.

Die ersten Teilzellen 4.1 sind über eine erste Vorlaufleitung 20 und eine erste Rücklaufleitung 25 mit einem ersten Abscheidebehälter 5 verbunden, in dem das bei der Elektrolyse in den Elektrolysezellen 4 erzeugte erste Produktgas 10 und Ausgangsflüssigkeit 50 gesammelt werden. In der ersten Vorlaufleitung 20 befinden sich ein erster Wärmetauscher 21 zur Temperierung von Ausgangsflüssigkeit 50 und eine erste Vorlaufpumpe 22, mittels derer Ausgangsflüssigkeit 50 von dem ersten Abscheidebehälter 5 durch die erste Vorlaufleitung 20 in die ersten Teilzellen 4.1 gepumpt wird. Die erste Rücklaufleitung 25 dient zur Leitung des bei der Elektrolyse in den Elektrolysezellen 4 erzeugten ersten Produktgases 10 in den ersten Abscheidebehälter 5. Die ersten Teilzellen 4.1, ein Behältervolumen des ersten Abscheidebehälters 5 sowie die erste Vorlaufleitung 20 und die erste Rücklaufleitung 25 bilden ein erstes Elektrolyseurvolumen des Elektrolyseurs 1. Dem ersten Abscheidebehälter 5 ist über eine Speiseleitung 13 Ausgangsflüssigkeit 50 zuführbar. Dazu befinden sich in der Speiseleitung 13 eine Speisepumpe 11 und ein Magnetventil 12, mittels dessen die Speiseleitung 13 geöffnet und verschlossen werden kann. Aus dem ersten Abscheidebehälter 5 ist über eine erste Ausgangsleitung 17 erstes Produktgas 10 abführbar. In der ersten Ausgangsleitung 17 befindet sich ein erstes Druckregelventil 16 zur Regelung eines Gasdrucks des ersten Produktgases 10.

Die zweiten Teilzellen 4.2 sind über eine zweite Vorlaufleitung 40 und eine zweite Rücklaufleitung 45 mit dem zweiten Abscheidebehälter 6 verbunden, in dem das bei der Elektrolyse in den Elektrolysezellen 4 erzeugte zweite Produktgas 30 und Ausgangsflüssigkeit 50 gesammelt werden. In der zweiten Vorlaufleitung 40 befinden sich ein zweiter Wärmetauscher 41 zur Temperierung von Ausgangsflüssigkeit 50 und eine zweite Vorlaufpumpe 42, mittels derer Ausgangsflüssigkeit 50 von dem zweiten Abscheidebehälter 6 durch die zweite Vorlaufleitung 40 in die zweiten Teilzellen 4.2 gepumpt wird. Die zweite Rücklaufleitung 45 dient zur Leitung des bei der Elektrolyse in den Elektrolysezellen 4 erzeugten zweiten Produktgases 30 in den zweiten Abscheidebehälter 6. Die zweiten Teilzellen 4.2, ein Behältervolumen des zweiten Abscheidebehälters 6 sowie die zweite Vorlaufleitung 40 und die zweite Rücklaufleitung 45 bilden ein zweites Elektrolyseurvolumen des Elektrolyseurs 1. Aus dem zweiten Abscheidebehälter 6 ist über eine Ablassleitung 14 Ausgangsflüssigkeit 50 ablassbar. Dazu befinden sich in der Ablassleitung 14 eine Ablassventil 31, mittels dessen die Ablassleitung 14 geöffnet und verschlossen werden kann. Aus dem zweiten Abscheidebehälter 6 ist über eine zweite Ausgangsleitung 37 zweites Produktgas 30 abführbar. In der zweiten Ausgangsleitung 37 befindet sich ein zweites Druckregelventil 36 zur Regelung eines Gasdrucks des zweiten Produktgases 30.

Das in FIG 1 dargestellte Ausführungsbeispiel der Prüfvorrichtung 3 umfasst eine Messvorrichtung 8 zur Erfassung einer Flüssigkeitsmenge der Ausgangsflüssigkeit 50 in jedem der beiden Elektrolyseurvolumina sowie eine nicht dargestellte Auswerteeinheit zur Ermittlung des Flüssigkeitsmengenstroms der Ausgangsflüssigkeit 50 zwischen den beiden Elektrolyseurvolumina anhand der von der Messvorrichtung 8 erfassten Messwerte. Die Messvorrichtung 8 umfasst für jeden Abscheidebehälter 5, 6 einen Füllstandssensor 9 zur Erfassung eines Füllstands der Ausgangsflüssigkeit 50 in dem Behältervolumen des jeweiligen Abscheidebehälters 5, 6 und/oder einen Drucksensor 15 zur Erfassung eines Gasdrucks in dem Behältervolumen des jeweiligen Abscheidebehälters 5, 6. In dem in FIG 1 dargestellten Ausführungsbeispiel umfasst die Messvorrichtung 8 für jeden Abscheidebehälter 5, 6 sowohl einen Füllstandssensor 9 als auch einen Drucksensor 15. In einfacheren Ausführungsbeispielen umfasst die Messvorrichtung 8 für jeden oder nur für einen der Abscheidebehälter 5, 6 entweder einen Füllstandssensor 9 oder einen Drucksensor 15.

Gemäß einem ersten Ausführungsbeispiel eines Verfahrens zur Überprüfung der Membrandichtheit des Elektrolyseurs 1 wird die Elektrolyse für eine Unterbrechungsdauer unterbrochen und während der Unterbrechungsdauer wird eine Testprozedur zur Überprüfung der Membrandichtheit durchgeführt.

Für die Testprozedur werden die beiden Elektrolyseurvolumina zunächst mit definierten, voneinander verschiedenen Flüssigkeitsmengen der Ausgangsflüssigkeit 50 befüllt. Dazu wird einer der beiden Abscheidebehälter 5, 6 bis zu einem vorgegebenen ersten Füllstand mit Ausgangsflüssigkeit 50 befüllt und der andere Abscheidebehälter 5, 6 wird bis zu einem vorgegebenen, von dem ersten Füllstand verschiedenen zweiten Füllstand mit Ausgangsflüssigkeit 50 befüllt.

Vorzugsweise werden ferner die Gasdrücke in den beiden Abscheidebehältern 5, 6 einander angeglichen. Beispielsweise werden dazu die Gasdrücke in den beiden Elektrolyseurvolumina einem Umgebungsdruck in einer Umgebung des Elektrolyseurs 1 angeglichen.

Anschließend wird ein Zeitbedarf für ein Angleichen der Flüssigkeitsmengen in den beiden Elektrolyseurvolumina anhand eines ermittelten Flüssigkeitsmengenstroms zwischen den beiden Elektrolyseurvolumina bestimmt. Dazu wird wiederholt mittels der Messvorrichtung 8 eine Differenz zwischen den Füllständen der Ausgangsflüssigkeit 50 und/oder zwischen den Gasdrücken in den beiden Abscheidebehälter 5, 6 ermittelt und ausgewertet. Der Zeitbedarf für ein Angleichen der Flüssigkeitsmengen in den beiden Elektrolyseurvolumina wird beispielsweise entweder direkt gemessen, indem eine Zeit bis zum Verschwinden des Flüssigkeitsmengenstroms oder bis zum Erreichen einer vorgegebenen Flüssigkeitsmengendifferenz zwischen den Flüssigkeitsmengen oder einer vorgegebenen Gasdruckdifferenz zwischen den Gasdrücken in den Abscheidebehältern 5, 6 erfasst wird, oder indem der Zeitbedarf für ein Angleichen der beiden Flüssigkeitsmengen anhand einer Extrapolation der erfassten Flüssigkeitsmengenströme bestimmt wird.

Alternativ kann ein mathematisches Modell für einen zeitlichen Verlauf des Angleichens der Flüssigkeitsmengen zur Ermittlung des Zeitbedarfs verwendet werden. Für den Fall, dass die Flüssigkeitsfüllstände in den Abscheidebehältern 5, 6 linear mit den Flüssigkeitsmengen korrelieren, wie es für gängige Formen von Abscheidebehältern 5, 6 der Fall ist, wird beispielsweise vorausgesetzt, dass die Füllstandsdifferenz $\Delta h$ zwischen den Flüssigkeitsfüllständen in den Abscheidebehältern 5, 6 exponentiell mit der Zeit t gemäß $\Delta h(t) = h_0 \exp(-kt)$ abnimmt, wobei k eine Konstante ist, die ein Maß für den Zeitbedarf für ein Angleichen der Flüssigkeitsfüllstände in den beiden Abscheidebehältern 5, 6 ist. Eine Auswertung der Logarithmuswerte $\ln(\Delta h)$ der Messwerte für die Füllstandsdifferenz $\Delta h$ in Abhängigkeit von der Zeit t erlaubt eine näherungsweise Bestimmung der Konstante k aus der Steigung einer durch diese Logarithmuswerte gelegten Gerade.

Auf eine Leckage wenigstens einer Membran 7 wird beispielsweise geschlossen, wenn der bei der Testprozedur ermittelte Zeitbedarf für ein Angleichen der Flüssigkeitsmengen in den beiden Elektrolyseurvolumina kleiner als ein vorgegebener Zeitbedarfsschwellenwert ist.

Die beschriebene Testprozedur kann auch zweimal hintereinander ausgeführt werden, wobei die Rollen der Abscheidebehälter 5, 6 vertauscht werden, so dass bei einer ersten Durchführung der Testprozedur beispielsweise der erste Abscheidebehälter 5 mit einer größeren Flüssigkeitsmenge der Ausgangsflüssigkeit 50 als der zweite Abscheidebehälter 6 befüllt wird, während bei der zweiten Durchführung der Testprozedur der zweite Abscheidebehälter 6 mit einer größeren Flüssigkeitsmenge der Ausgangsflüssigkeit 50 als der erste Abscheidebehälter 5 befüllt wird. Dadurch kann die Zuverlässigkeit der Überprüfung der Membrandichtheit vorteilhaft erhöht werden, da systematische Störeffekte erkannt werden können.

Alternativ oder zusätzlich wird die Membrandichtheit des Elektrolyseurs 1 während dessen Betriebes, d.h. während einer Elektrolyse überprüft. Dazu umfasst die Prüfvorrichtung 3 zusätzlich einen Strommesser 60 zur Erfassung einer Elektrolysestromstärke des Elektrolyseurs 1. Während einer Elektrolyse wird mittels des Strommessers 60 eine Elektrolysestromstärke erfasst und mittels der Messvorrichtung 8 ein Flüssigkeitsmengenstrom der Ausgangsflüssigkeit 50 zwischen den beiden Elektrolyseurvolumina ermittelt. Der Flüssigkeitsmengenstrom wird dabei beispielsweise ermittelt, indem die zeitliche Änderung eines Flüssigkeitsvolumens der Ausgangsflüssigkeit 50 in wenigstens einem der beiden Elektrolyseurvolumina ermittelt wird. Dazu wird beispielsweise eine zeitliche Änderung eines Flüssigkeitsvolumens der Ausgangsflüssigkeit in dem Behältervolumen des Abscheidebehälters 5, 6 des jeweiligen Elektrolyseurvolumens ermittelt, indem ein Füllstand von Ausgangsflüssigkeit 50 in dem Behältervolumen wiederholt erfasst und ausgewertet wird.

Aus dem ermittelten Flüssigkeitsmengenstrom und der erfassten Elektrolysestromstärke wird eine Verhältniskenngröße Q gebildet, die proportional zu dem Quotienten aus dem ermittelten Flüssigkeitsmengenstrom und der erfassten Elektrolysestromstärke ist. Die Verhältniskenngröße Q wird zur Beurteilung der Membrandichtheit verwendet. Dazu werden ein erster Verhältnisschwellenwert $Q_{S1}$ und ein zweiter Verhältnisschwellenwert $Q_{S2}$ für die Verhältniskenngröße Q vorgegeben und es wird auf eine Leckage wenigstens einer Membran 7 geschlossen, wenn die Verhältniskenngröße Q den vorgegebenen ersten Verhältnisschwellenwert $Q_{S1}$ überschreitet oder den zweiten Verhältnisschwellenwert $Q_{S2}$ unterschreitet.

Dieser Bildung und Auswertung der Verhältniskenngröße Q liegt die Idee zugrunde, dass insbesondere bei Verwendung von Wasser als Ausgangsflüssigkeit 50 mit jedem Molekül Wasserstoff auch wenige Moleküle Wasser, die nicht an der Elektrolysereaktion beteiligt sind, durch eine Membran 7 gelangen. Hierbei ist das Verhältnis dieser beiden Stoffströme in guter Näherung konstant. Sollte eine Leckage einer Membran 7 eintreten, entsteht ein zusätzlicher Transportweg, wodurch dieses Verhältnis gestört wird. Der Wassermengenstrom wird anhand der zeitlichen Änderung des Füllstands des Wassers im zweiten Abscheidebehälter 6 quantifiziert. Der Wassermengenstrom ergibt sich zu

$$dn_w/dt = c_w \cdot A \cdot dh/dt. \qquad [1]$$

In Gleichung [1] stehen $n_w$ für die Wassermenge im zweiten Abscheidebehälter 6, $c_w$ für die Stoffmengenkonzentration des Wassers, A für die Querschnittsfläche des zweiten Abscheidebehälters 6 und h für den Füllstand von Wasser im zweiten Abscheidebehälter 6. Als Zahlenwert für $c_w$ kann z.B. 55,5 mol/l verwendet werden, wobei in diesem Fall Temperatureffekte und gegebenenfalls vorliegende Gasblasen vernachlässigt werden. Überraschenderweise hat sich gezeigt, dass solche relativ groben Näherungen trotzdem zu einer zuverlässigen Methode führen. Die zeitliche Änderung des Füllstands wird zweckmäßigerweise mit Hilfe einer linearen Regression der zeitlich diskreten Füllstandswerte berechnet. Beispielsweise können jeweils 10 Werte, die in einem zeitlichen Abstand von je 5 Sekunden erfasst werden, herangezogen werden.

Der Wasserstoffstrom durch die Membranen 7 wird mit Hilfe der Faradayschen Gesetze berechnet. Hierbei werden die Anzahl der aktiven Elektrolysezellen 4 des Zellblocks 2 und die Elektrolysestromstärke berücksichtigt. Weiterhin wird eine Stromausbeute von 100 % angenommen. Der Wasserstoffstrom ergibt sich zu

$$dn_{H2}/dt = a \cdot I/(2 \cdot F).$$ [2]

In Gleichung [2] stehen $n_{H2}$ für die erzeugte Wasserstoffmenge, a für die Anzahl aktiver Elektrolysezellen 4 des Zellblocks 2, I für die Elektrolysestromstärke und F für die Faraday-Konstante.

Das Verhältnis des Wassermengenstroms gemäß Gleichung [1] und des Wasserstoffstroms gemäß Gleichung [2] ist somit proportional zu dem Quotienten (dh/dt)/I und somit zu der Verhältniskenngröße Q.

In der obigen Betrachtung wird das Verhältnis der Stoffströme mittels der Gleichungen [1] und [2] berechnet. Wegen dabei verwendeter Näherungen können die tatsächlichen Werte von den gemäß den Gleichungen [1] und [2] berechneten Werten geringfügig abweichen. Bei intakten Membranen 7 nimmt das Verhältnis des Wassermengenstroms zu dem Wasserstoffstrom typischerweise einen einstelligen Zahlenwert an, so dass als obere Grenze, ab welcher eine Membran 7 als defekt gilt, beispielsweise der Zahlenwert 10 gesetzt werden kann. Prinzipiell brauchen jedoch für die Definition der Verhältniskenngröße Q und der Verhältnisschwellenwerte $Q_{S1}$, $Q_{S2}$ konstante Faktoren, wie z.B. die Querschnittfläche A des zweiten Abscheidebehälters 6 oder die Anzahl a aktiver Elektrolysezellen 4, nicht berücksichtigt zu werden, so dass der reine Zahlenwert (und die Einheit) der Verhältnisschwellenwerte $Q_{S1}$, $Q_{S2}$ entsprechend angepasst werden können.

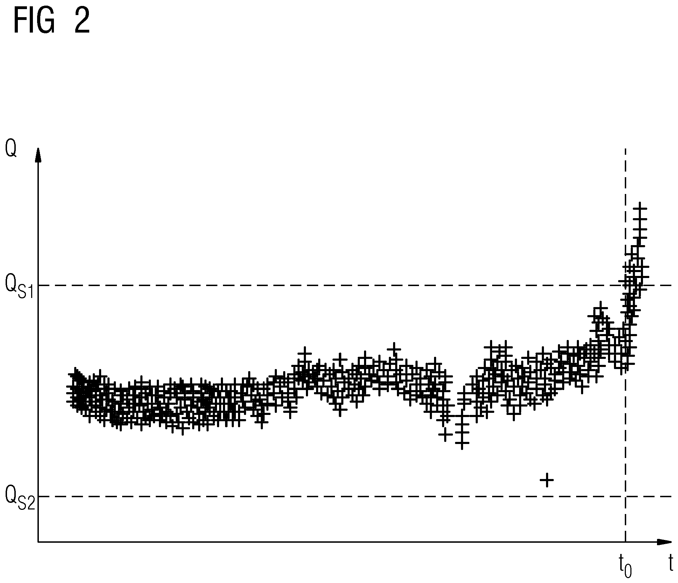

FIG 2 zeigt ein Diagramm eines Verlaufs einer derartigen Verhältniskenngröße Q in Abhängigkeit von der Zeit t, wobei ermittelte Werte der Verhältniskenngröße Q als Kreuze dargestellt sind. Bei einer Überschreitungszeit $t_0$ überschreitet die Verhältniskenngröße Q den ersten Verhältnisschwellenwert $Q_{S1}$. Daraus wird geschlossen, dass wenigstens eine Membran 7 zur Überschreitungszeit $t_0$ eine Leckage aufweist. Entsprechend wird auf eine Leckage wenigstens einer Membran 7 geschlossen, wenn die Verhältniskenngröße Q den zweiten Verhältnisschwellenwert $Q_{S2}$ unterschreitet. Die zeitlichen Schwankungen der Verhältniskenngröße Q gehen auf Schwankungen der Elektrolysestromstärke, der Temperatur und des Systemdrucks zurück. Die Einflüsse dieser Schwankungen der Elektrolysestromstärke, der Temperatur und des Systemdrucks können durch eine Ersetzung der Verhältniskenngröße Q durch eine verfeinerte Kenngröße zwar reduziert werden, jedoch ist eine derartige Verfeinerung im Allgemeinen unnötig, da die Auswirkungen einer Leckage einer Membran 7 die Einflüsse von Schwankungen der Elektrolysestromstärke, der Temperatur und des Systemdrucks deutlich übertreffen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.


**Patentansprüche**

1. Verfahren zur Überprüfung einer Membrandichtheit wenigstens einer Membran (7) eines Elektrolyseurs (1), der zwei durch die wenigstens eine Membran (7) voneinander getrennte Elektrolyseurvolumina aufweist und zur Erzeugung zweier Produktgase (10, 30) aus einer Ausgangsflüssigkeit (50) mittels einer Elektrolyse ausgebildet ist, wobei

   - während einer Elektrolyse eine Elektrolysestromstärke erfasst wird und ein Flüssigkeitsmengenstrom der Ausgangsflüssigkeit (50) zwischen den beiden Elektrolyseurvolumina ermittelt wird
   - und eine Verhältniskenngröße (Q), die proportional zu dem Quotienten aus dem ermittelten Flüssigkeitsmengenstrom und der erfassten Elektrolysestromstärke ist, gebildet und zur Überprüfung der Membrandichtheit verwendet wird, wobei ein erster Verhältnisschwellenwert ($Q_{S1}$) für die Verhältniskenngröße vorgegeben wird und auf eine Leckage wenigstens einer Membran (7) geschlossen wird, wenn die Verhältniskenngröße (Q) den vorgegebenen ersten Verhältnisschwellenwert ($Q_{S1}$) überschreitet und/oder ein zweiter Verhältnisschwellenwert ($Q_{S2}$) für die Verhältniskenngröße vorgegeben wird und auf eine Leckage wenigstens einer Membran (7) geschlossen wird, wenn die Verhältniskenngröße (Q) den vorgegebenen zweiten Verhältnisschwellenwert ($Q_{S2}$) unterschreitet.

2. Verfahren nach Anspruch 1,
   **dadurch gekennzeichnet, dass** zur Ermittlung des Flüssigkeitsmengenstroms eine zeitliche Änderung eines Flüssigkeitsvolumens der Ausgangsflüssigkeit (50) in wenigstens einem der beiden Elektrolyseurvolumina ermittelt wird.

3. Verfahren nach Anspruch 2,
   wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst,

**dadurch gekennzeichnet, dass** die zeitliche Änderung eines Flüssigkeitsvolumens der Ausgangsflüssigkeit (50) in wenigstens einem der beiden Elektrolyseurvolumina ermittelt wird, indem eine Füllstandshöhe von Ausgangsflüssigkeit (50) in dem Behältervolumen des Elektrolyseurvolumens wiederholt erfasst und ausgewertet wird.

4. Verfahren nach Anspruch 3,
**dadurch gekennzeichnet, dass** die zeitliche Änderung eines Flüssigkeitsvolumens der Ausgangsflüssigkeit (50) in wenigstens einem Behältervolumen eines Elektrolyseurvolumens ermittelt wird, indem ein Gasdruck in dem Behältervolumen wiederholt erfasst und ausgewertet wird.

5. Verfahren nach einem der vorhergehenden Ansprüche,
wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst,
**dadurch gekennzeichnet, dass** der Flüssigkeitsmengenstrom ermittelt wird, indem eine zeitliche Änderung einer Druckdifferenz zwischen Gasdrücken in den beiden Behältervolumina erfasst und ausgewertet wird.

6. Verfahren nach einem der vorhergehenden Ansprüche,
**dadurch gekennzeichnet, dass** die Elektrolyse für eine Unterbrechungsdauer unterbrochen wird, die Elektrolyseurvolumina mit voneinander verschiedenen Flüssigkeitsmengen der Ausgangsflüssigkeit (50) befüllt werden und anhand eines während der Unterbrechungsdauer ermittelten Flüssigkeitsmengenstroms ein Zeitbedarf für ein Angleichen der Flüssigkeitsmengen in den beiden Elektrolyseurvolumina bestimmt und zur Beurteilung der Membrandichtheit verwendet wird.

7. Verfahren nach Anspruch 6,
**dadurch gekennzeichnet, dass** vor der Bestimmung des Zeitbedarfs für ein Angleichen der beiden Flüssigkeitsmengen Gasdrücke in den beiden Elektrolyseurvolumina einander angeglichen werden.

8. Verfahren nach Anspruch 6,
**dadurch gekennzeichnet, dass** vor der Bestimmung des Zeitbedarfs für ein Angleichen der beiden Flüssigkeitsmengen Gasdrücke in den beiden Elektrolyseurvolumina einem Umgebungsdruck in einer Umgebung des Elektrolyseurs (1) angeglichen werden.

9. Verfahren nach einem der Ansprüche 6 bis 8,
**dadurch gekennzeichnet, dass** der Flüssigkeitsmengenstrom während der Unterbrechungsdauer wiederholt ermittelt wird und der Zeitbedarf für ein Angleichen der beiden Flüssigkeitsmengen anhand einer Extrapolation der erfassten Flüssigkeitsmengenströme bestimmt wird.

10. Prüfvorrichtung (3) zur Überprüfung einer Membrandichtheit wenigstens einer Membran (7) eines Elektrolyseurs (1), der zwei durch die wenigstens eine Membran (7) voneinander getrennte Elektrolyseurvolumina aufweist und zur Erzeugung zweier Produktgase (10, 30) aus einer Ausgangsflüssigkeit (50) mittels einer Elektrolyse ausgebildet ist, die Prüfvorrichtung (3) umfassend

- einen Strommesser (60) zur Erfassung einer Elektrolysestromstärke des Elektrolyseurs (1),
- eine Messvorrichtung (8) zur Erfassung einer Flüssigkeitsmenge der Ausgangsflüssigkeit (50) in wenigstens einem der beiden Elektrolyseurvolumina und
- eine Auswerteeinheit zur Ermittlung eines Flüssigkeitsmengenstroms der Ausgangsflüssigkeit (50) zwischen den beiden Elektrolyseurvolumina anhand der von der Messvorrichtung (8) erfassten Messwerte und zum Bilden einer Verhältniskenngröße (Q), die proportional zu dem Quotienten aus dem ermittelten Flüssigkeitsmengenstrom und der erfassten Elektrolysestromstärke ist, wobei ein erster Verhältnisschwellenwert ($Q_{S1}$) für die Verhältniskenngröße vorgegeben wird und auf eine Leckage wenigstens einer Membran (7) geschlossen wird, wenn die Verhältniskenngröße (Q) den vorgegebenen ersten Verhältnisschwellenwert ($Q_{S1}$) überschreitet und/oder ein zweiter Verhältnisschwellenwert ($Q_{S2}$) für die Verhältniskenngröße vorgegeben wird und auf eine Leckage wenigstens einer Membran (7) geschlossen wird, wenn die Verhältniskenngröße (Q) den vorgegebenen zweiten Verhältnisschwellenwert ($Q_{S2}$) unterschreitet.

11. Prüfvorrichtung (3) nach Anspruch 10,
wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst,
**dadurch gekennzeichnet, dass** die Messvorrichtung (8) wenigstens einen Füllstandssensor (9) zur Erfassung eines Füllstands der Ausgangsflüssigkeit (50) in einem Behältervolumen und/oder wenigstens einen Drucksensor (15) zur Erfassung eines Gasdrucks in einem Behältervolumen umfasst.

**Claims**

1.  Method for checking a membrane leaktightness of at least one membrane (7) of an electrolyzer (1) which comprises two electrolyzer volumes separated from one another by the at least one membrane (7) and is configured in order to produce two product gases (10, 30) from a starting liquid (50) by means of electrolysis, wherein

    - during electrolysis, an electrolysis current strength is detected and a liquid flow rate of the starting liquid (50) between the two electrolyzer volumes is determined,
    - and a ratio parameter (Q), which is proportional to the ratio of the liquid flow rate determined and the electrolysis current strength detected, is formed and is used to check the membrane leaktightness, wherein a first ratio threshold value ($Q_{S1}$) for the ratio parameter is specified, and a leak of at least one membrane (7) is inferred when the ratio parameter (Q) exceeds the specified first ratio threshold value ($Q_{S1}$), and/or a second ratio threshold value ($Q_{S2}$) for the ratio parameter is specified, and a leak of at least one membrane (7) is inferred when the ratio parameter (Q) falls below the specified second ratio threshold value ($Q_{S2}$) .

2.  Method according to Claim 1,
    **characterized in that**, in order to determine the liquid flow rate, a time variation of a liquid volume of the starting liquid (50) in at least one of the two electrolyzer volumes is determined.

3.  Method according to Claim 2,
    wherein each of the two electrolyzer volumes comprises a container volume of a separator container (5, 6), in which a product gas (10, 30) and starting liquid (50) are collected, **characterized in that** the time variation of a liquid volume of the starting liquid (50) in at least one of the two electrolyzer volumes is determined by repeatedly detecting and evaluating a filling level of starting liquid (50) in the container volume of the electrolyzer volume.

4.  Method according to Claim 3,
    **characterized in that** the time variation of a liquid volume of the starting liquid (50) in at least one container volume of an electrolyzer volume is determined by repeatedly detecting and evaluating a gas pressure in the container volume.

5.  Method according to one of the preceding claims,
    wherein each of the two electrolyzer volumes comprises a container volume of a separator container (5, 6), in which a product gas (10, 30) and starting liquid (50) are collected, **characterized in that** the liquid flow rate is determined by detecting and evaluating a time variation of a pressure difference between gas pressures in the two container volumes.

6.  Method according to one of the preceding claims,
    **characterized in that** the electrolysis is interrupted for an interruption time, the electrolyzer volumes are filled with mutually different liquid amounts of the starting liquid (50), and a time requirement for equalization of the liquid amounts in the two electrolyzer volumes is determined with the aid of a liquid flow rate determined during the interruption time and is used to assess the membrane leaktightness.

7.  Method according to Claim 6,
    **characterized in that**, before the determination of the time requirement for equalization of the two liquid amounts, gas pressures in the two electrolyzer volumes are equalized to one another.

8.  Method according to Claim 6,
    **characterized in that**, before the determination of the time requirement for equalization of the two liquid amounts, gas pressures in the two electrolyzer volumes are equalized to an ambient pressure in an environment of the electrolyzer (1).

9.  Method according to one of Claims 6 to 8,
    **characterized in that** the liquid flow rate is determined repeatedly during the interruption time, and the time requirement for equalization of the two liquid amounts is determined with the aid of an extrapolation of the liquid flow rates detected.

10. Test device (3) for checking a membrane leaktightness of at least one membrane (7) of an electrolyzer (1) which comprises two electrolyzer volumes separated from one another by the at least one membrane (7) and is configured in order to produce two product gases (10, 30) from a starting liquid (50) by means of electrolysis, the test device (3) comprising

- an ammeter (60) for detecting an electrolysis current strength of the electrolyzer (1),
- a measuring device (8) for detecting a liquid amount of the starting liquid (50) in at least one of the two electrolyzer volumes and
- an evaluation unit for determining a liquid flow rate of the starting liquid (50) between the two electrolyzer volumes with the aid of the measurement values detected by the measuring device (8) and for forming a ratio parameter (Q), which is proportional to the ratio of the liquid flow rate determined and the electrolysis current strength detected, wherein a first ratio threshold value ($Q_{S1}$) for the ratio parameter is specified, and a leak of at least one membrane (7) is inferred when the ratio parameter (Q) exceeds the specified first ratio threshold value ($Q_{S1}$), and/or a second ratio threshold value ($Q_{S2}$) for the ratio parameter is specified, and a leak of at least one membrane (7) is inferred when the ratio parameter (Q) falls below the specified second ratio threshold value ($Q_{S2}$).

11. Test device (3) according to Claim 10,
wherein each of the two electrolyzer volumes comprises a container volume of a separator container (5, 6), in which a product gas (10, 30) and starting liquid (50) are collected,
**characterized in that** the measuring device (8) comprises at least one filling level sensor (9) for detecting a filling level of the starting liquid (50) in a container volume and/or at least one pressure sensor (15) for detecting a gas pressure in a container volume.

**Revendications**

1. Procédé de contrôle de l'étanchéité d'au moins une membrane (7) d'un électrolyseur (1), qui a deux volumes d'électrolyseur séparés l'un de l'autre par la au moins une membrane (7), et de production de deux produits (10, 30) gazeux à partir d'un liquide (50) initial au moyen d'une électrolyse, dans lequel

- pendant une électrolyse, on relève une intensité du courant d'électrolyse et on détermine un flux massique du liquide (50) initial entre les deux volumes de l'électrolyseur
- et on forme une grandeur (Q) caractéristique de rapport, qui est proportionnelle au quotient du flux massique de liquide déterminé par l'intensité du courant d'électrolyse relevé et on l'utilise pour le contrôle de l'étanchéité de la membrane, dans lequel on donne à l'avance une première valeur ($Q_{S1}$) de seuil de rapport de la grandeur caractéristique de rapport et on déduit une fuite d'au moins une membrane (7), si la grandeur (Q) caractéristique de rapport dépasse la première valeur ($Q_{S1}$) de seuil de rapport donnée à l'avance et/ou on donne à l'avance une deuxième valeur ($Q_{S2}$) de seuil de rapport de la grandeur caractéristique de rapport et on déduit une fuite d'au moins une membrane (7), si la grandeur (Q) caractéristique de rapport est inférieure à la deuxième valeur ($Q_{S2}$) de seuil de rapport donnée à l'avance.

2. Procédé suivant la revendication 1,
**caractérisé en ce que**, pour la détermination du flux massique de liquide, on détermine une variation en fonction du temps d'un volume du liquide (50) initial dans au moins l'un des deux volumes de l'électrolyseur.

3. Procédé suivant la revendication 2,
dans lequel chacun des deux volumes de l'électrolyseur comprend un volume d'un récipient (5, 6) de dépôt, dans lequel un produit (10, 30) gazeux et du liquide (50) initial s'accumulent,
**caractérisé en ce que** l'on détermine la variation en fonction du temps d'un volume du liquide (50) initial dans au moins l'un des deux volumes de l'électrolyseur, en relevant de manière répétée et en exploitant le niveau de remplissage du liquide (50) initial dans le volume du récipient du volume de l'électrolyseur.

4. Procédé suivant la revendication 3,
**caractérisé en ce que** l'on détermine la variation en fonction du temps d'un volume du liquide (50) initial dans au moins un volume de récipient d'un volume de l'électrolyseur, en relevant de manière répétée et en exploitant une pression du gaz dans le volume du récipient.

5. Procédé suivant l'une des revendications précédentes,
dans lequel chacun des deux volumes de l'électrolyseur comprend un volume d'un récipient (5, 6) de dépôt, dans lequel un produit (10, 30) gazeux et du liquide (50) initial s'accumulent,
**caractérisé en ce que** l'on détermine le flux massique de liquide, en relevant et en exploitant une variation dans le temps d'une différence de pression entre des pressions de gaz dans les deux volumes du récipient.

6. Procédé suivant l'une des revendications précédentes,
**caractérisé en ce que** l'on interrompt l'électrolyse pendant une durée d'interruption, on remplit les volumes d'électrolyseur de quantités différentes l'une de l'autre du liquide (50) initial et, à l'aide d'un flux massique de liquide déterminé pendant la durée de l'interruption, on détermine le temps dont on a besoin pour égaliser les quantités de liquide dans les deux volumes de l'électrolyseur et on l'utilise pour juger de l'étanchéité de la membrane.

7. Procédé suivant la revendication 6,
**caractérisé en ce que**, avant la détermination du temps dont on a besoin pour égaliser les deux quantités de liquide, on égalise l'une à l'autre les pressions du gaz dans les deux volumes de l'électrolyseur.

8. Procédé suivant la revendication 6,
**caractérisé en ce qu'**avant la détermination du temps dont on a besoin pour égaliser les deux quantités de liquide, on égalise les pressions du gaz dans les deux volumes de l'électrolyseur à une pression ambiante dans une atmosphère ambiante où se trouve l'électrolyseur (1).

9. Procédé suivant l'une des revendications 6 à 8,
**caractérisé en ce que** l'on détermine de manière répétée le flux massique de liquide pendant la durée de l'interruption et on détermine le temps dont on a besoin pour égaliser les deux quantités de liquide à l'aide d'une extrapolation des flux massiques relevés.

10. Système (3) de contrôle pour le contrôle de l'étanchéité d'au moins une membrane (7) d'un électrolyseur (1), qui a deux volumes d'électrolyseur séparés l'un de l'autre par la au moins une membrane (7) et qui est constitué, pour la production de deux produits (10, 30) gazeux, à partir d'un liquide (50) initial au moyen d'une électrolyse, le système (3) de contrôle comprenant

- un ampèremètre (60) pour relever une intensité du courant d'électrolyse de l'électrolyseur (1),
- un dispositif (8) de mesure pour relever une quantité du liquide (50) initial dans au moins l'un des deux volumes de l'électrolyseur et
- une unité d'exploitation pour la détermination d'un flux massique du liquide (50) initial entre les deux volumes de l'électrolyseur, à l'aide des valeurs de mesure relevées par le dispositif (8) de mesure, et pour former une grandeur (Q) caractéristique de rapport, qui est proportionnelle au quotient du flux massique de liquide déterminé par l'intensité du courant d'électrolyse relevé et on l'utilise pour le contrôle de l'étanchéité de la membrane, dans lequel on donne à l'avance une première valeur ($Q_{S1}$) de seuil de rapport de la grandeur caractéristique de rapport et on déduit une fuite d'au moins une membrane (7), si la grandeur (Q) caractéristique de rapport dépasse la première valeur ($Q_{S1}$) de seuil de rapport donnée à l'avance et/ou on donne à l'avance une deuxième valeur ($Q_{S2}$) de seuil de rapport de la grandeur caractéristique de rapport et on déduit une fuite d'au moins une membrane (7), si la grandeur (Q) caractéristique de rapport est inférieure à la deuxième valeur ($Q_{S2}$) de seuil de rapport donnée à l'avance.

11. Système (3) de contrôle suivant la revendication 10,
dans lequel chacun des deux volumes de l'électrolyseur comprend un volume d'un récipient (5, 6) de dépôt, dans lequel un produit (10, 30) gazeux et du liquide (50) initial s'accumulent,
**caractérisé en ce que** le dispositif (8) de mesure comprend au moins un détecteur (5) de niveau pour relever un niveau du liquide (50) initial dans un volume du récipient et/ou au moins un capteur (15) de pression pour relever une pression du gaz dans un volume du récipient.

FIG 1

FIG 2

**IN DER BESCHREIBUNG AUFGEFÜHRTE DOKUMENTE**

**In der Beschreibung aufgeführte Patentdokumente**

- JP 2010121146 A
- EP 2006418 A2